# EUROPEAN PATENT APPLICATION

(11) **EP 2 019 535 A1**
(43) Date of publication of application: **28.01.2009**
(21) Application number: 07014674.1
(22) Date of filing: 26.07.2007
(51) Int. Cl.: H04L 29/12, H04L 29/08

(54) **Requester-aware domain name system**

(71) Applicant: Koninklijke KPN N.V., 2516 CK The Hague (NL); Nederlandse Organisatie voor Toegepast- Natuurwetenschappelijk Onderzoek TNO, 2628 VK The Hague (NL)
(72) Inventor: Peeters, Marc Eric, 2498 EE The Hague (NL); Ait Yaiz, Rachid, 7331 NL Apeldoorn (NL); Cramer, Eelco, 2612 GB Delft (NL)
(74) Representative: Wuyts, Koenraad Maria

(57) **Abstract**

A method is proposed for providing a service at a DNS server on a data network. A request is initiated by a client, and is received at the DNS server for access to a network site referred to in the request by a domain name. The domain name is resolved under control of an attribute of the client. For example, the attribute comprises a network address of the client. As a result, the service enables to send different responses to different clients having submitted the same request.

## Description

### FIELD OF THE INVENTION

The invention relates to a method of providing a service at a DNS server on a data network. The invention further relates to software and to a server for implementing the method.

### BACKGROUND ART

In network data communication there are several ways to identify a host: e.g., by means of its hostname and by means of its IP address. People prefer the hostname identifier (e.g. *www.tno.nl*), while routers require fixed-length, hierarchically structured IP addresses (e.g. 192.87.96.136). The interface between these different preferences is the Domain Name System (DNS). The DNS is a hierarchical server system that maps domain names to network addresses. DNS is commonly employed by various applications, such as web browsers, to translate the hostnames supplied by people into IP addresses of the hosts providing the service (referred to as "name resolving" or "name look-up"), in order to let the routers be able to route traffic to the correct host. For net administrators and maintenance personnel a variety of well-known DNS name resolution and DNS information look-up utilities are available, such as nslookup ("name server lookup)", "host", and "dig" (Domain Information Gropcr). The manner wherein DNS queries run over a large network, such as the Internet, is optimized in many ways, e.g., so as to distribute the domain name queries, for example, by using recursive and iterative queries, local, intermediate, root and authoritative name servers, etc.

DNS provides a number of services in addition to translating hostnamcs into IP addresses: host aliasing, mail server aliasing and load distribution.

As to host aliasing, a host with, a complicated hostname can have multiple alias names for facilitating its memorizing by users. For example, a hostname such as *"relay.,google.com"* could have aliases such as *"google.com"* and *"www.,google.com".* The hostname *"relay.google.com"* is said to be a canonical hostname. DNS can be invoked to obtain both the canonical hostname and the IP address for an alias hostname.

As to mail server aliasing, it is important, especially for mail servers, that the hostname be highly intuitive to people. However, in order to not require a single host to serve large domains such as *"hotmail.com"* for both email and web services, mail server aliasing is developed. As a result, DNS permits multiple hosts to have identical (aliased) hostnames. In this way for example TNO's web server and mail server can both be called *"tno.nl".*

As to load distribution, busy sites, such as *"google.com",* are replicated over multiple servers with different IP addresses. For such web servers, a set of IP addresses is associated with one canonical hostname. The DNS database contains this set of IP addresses. In response to a query by a client, the entire set of IP addresses is provided, but the ordering of the addresses within each reply is different, e.g., rotated. Usually an application uses the first IP address that is given. Load balancing in this manner can also be used by mail servers.

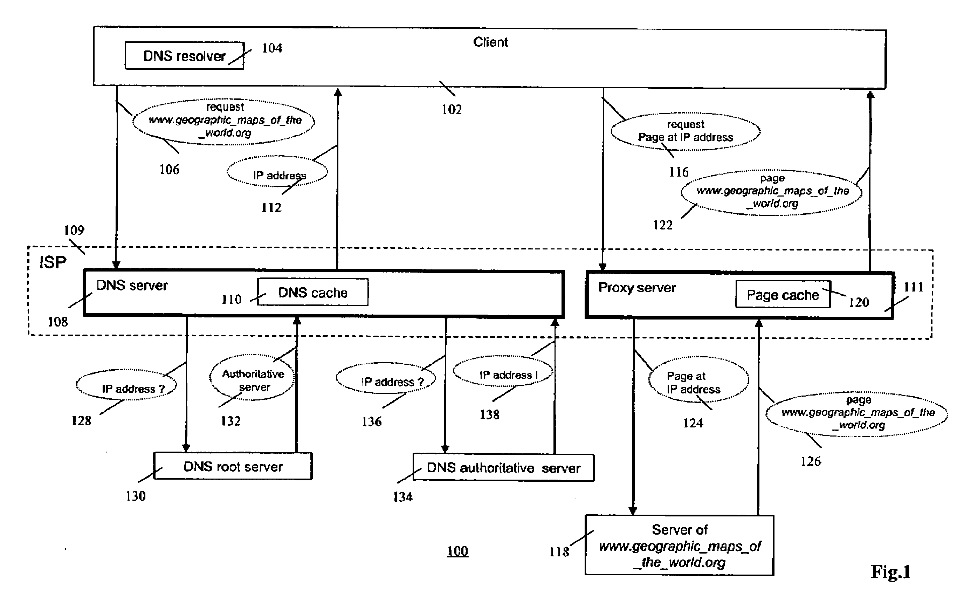

Fig.1 is a diagram of a data processing system 100 illustrating actions in operational use when downloading a web page. System 100 has a client 102, e.g., a PC, that includes a DNS resolver 104. As known, a DNS resolver is a set of software routines for creati ng, sending and interpreting query messages and reply messages in communications with Internet domain name servers. The user of client 102 causes client 102 to send (106) a request to a DNS server 108, e.g., a DNS server of his/her Internet service provider (ISP) 109 for the download of a specific web page, e.g., *www.geographic_maps_of_the_world.org.* Server 108 checks if the IP address for this page is in its DNS cache (110), and if so, returns (112) the IP address to client 102. Client 102 now responds by sending a request 116 to the address of the relevant server 118 for the web page at this IP address. A proxy server 111, e.g., also accommodated at ISP 109, then checks a page cache 120 to verify if the relevant page has been cached locally. If so, proxy server 111 sends (122) a copy of the cached page to client 102. If the page has not been cached in cache 120, proxy server 111 contacts (124) server 118 for downloading (126,122) the relevant page to client 102.

Now, if DNS server 108 does not have the relevant IP address in cache 110, server 108 sends (128) the DNS request for the relevant IP address to a root server 130 for the *".com"-*domain. Root server 130 returns (132) the contact information of authoritative server 134 for this domain. Server 108 now contacts (136) authoritative server 134 with the request for the IP address, whereupon authoritative server **134** returns (138) the IP address of *www.geographic_maps_of_the_world.org.* Server 108 then sends (112) the relevant IP address to client 102 who in turn requests (116) the page at this specific IP address. Proxy server 111 checks page cache 120 to verify if the relevant page has been cached locally. If so, server 111 sends (122) a copy of the cached page to client 102. If the page has not been cached in cache 120, server 111 contacts (124) server 118 for downloading (126, 122) the relevant page to client 102.

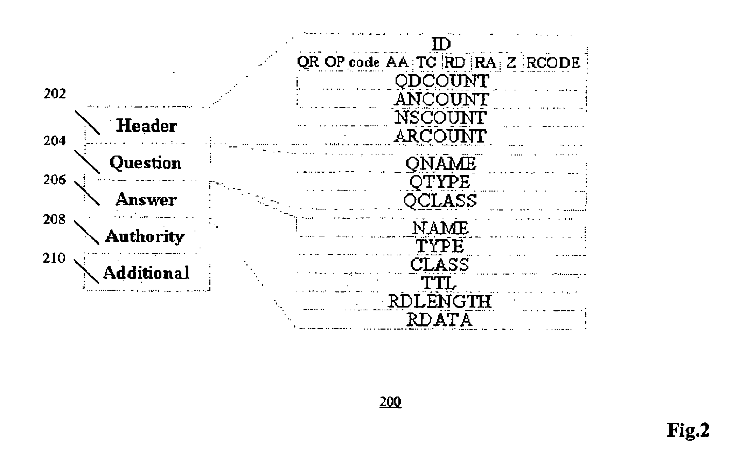

The DNS message format exchanged by the different hosts is represented in diagram 200 of Fig.2. A first part 202 of a DNS message is the *header section.* Header section 202 contains information about the type of query, information about how to match received replies with sent queries. Furthermore it contains information about the sender of the message (e.g., whether or not it is an authoritative server) and what to do with a message when the receiver does not have the correct DNS record in its database. A second part 204 is the *question section* and contains the actual query, containing the name that is being queried and a type field that indicates the type of question (e.g., if the query is for a mail server it is indicated by type MX). A third part 206 is the *answer section* and contains the records for the name that was queried. A reply can return multiple records in the answer, since a hostname can have multiple In addresses, e.g. in case of replicated web servers. A fourth part 208 is the *authority section,* contains records of other authoritative servers. As known, DNS has distributed the responsibility for assigning domain names and mapping them to IP network addresses through authoritative servers, one or more for cach domain, that publish the information about the associated domains. The last part 210, the *additional section,* contains other "helpful" records, such as "helpful" IP addresses.

Note that in the known protocol the network address of requesting client 102 is not propagated beyond server 108 to servers 130 and 134 farther in the hierarchy during activities (128) and (136).

### SUMMARY OF THE INVENTION

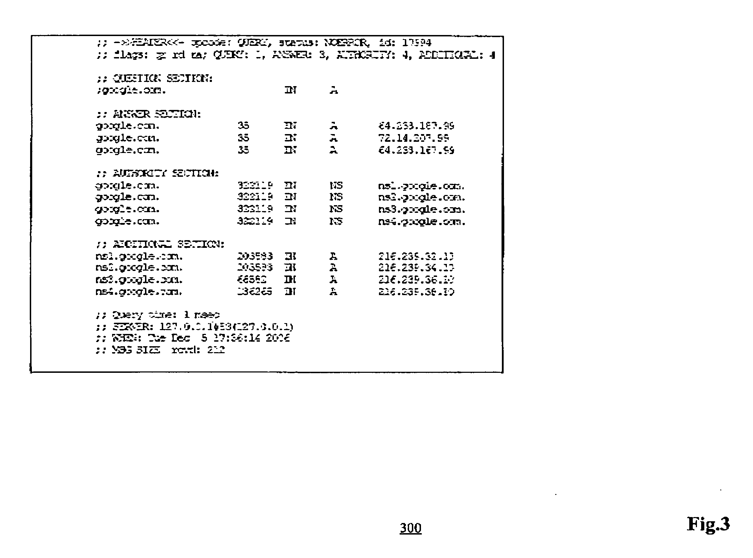

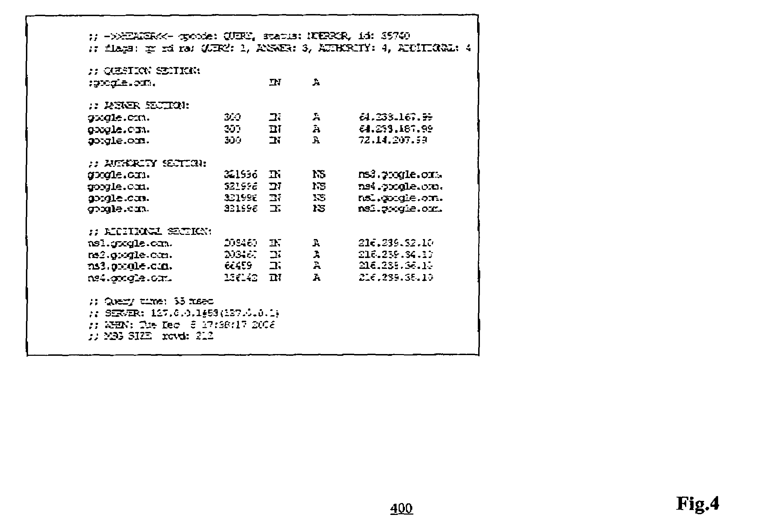

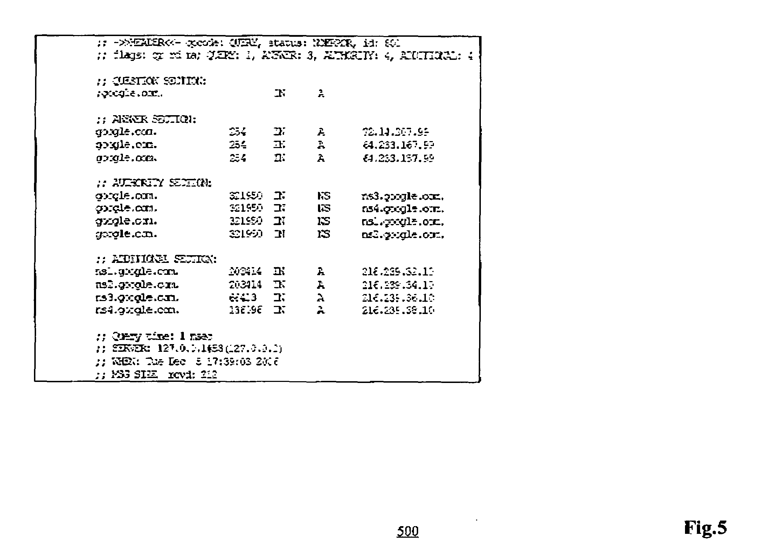

As mentioned above, the Linux program "dig" is one of the tools for retrieving DNS information. Figs. 3, 4 and 5 illustrate the example wherein "dig" is used to analyze the DNS actions involved in a request for the URL *"www.google.com"* of the Googlc site. Figs 3-5 give three responses 300, 400 and 500 to the DNS request for this URL. Some interesting observations can be made based on these responses. First, a very busy site, as *google.com* is, uses load balancing by providing three rotating IP addresses to DNS requests on *google.com.* Second, the additional section of the DNS messages can be used to provide names and IP addresses of authorized DNS servers. The authority section of the messages shows four Nameservers being the authoritative Nameservers for the domain name *"google.com". IP* addresses can generally be associated with geographic locations. This association between IP address and geographic location enables to see where the Google servers, referred to by the DNS servers, are located geographically. In this example, all three IP addresses are located in North America. This means that every DNS request for *google.com,* no matter whether it is executed from Europe, Asia or Australia, is sent to North America. In case a user from the Netherlands browses to *google.com,* he/she is redirected to google.nl that is running on a host closer to the Netherlands. But first, the DNS request has been executed and reaches a Google server in North America. It is not possible with standard DNS to provide access to different servers in response to requests based on, for example, the location of the requesting host. In other words it is not possible to *directly* provide the IP address of the *google.nl* server when a browser from a user in the Netherlands tries to resolve *google.com.* Therefore, the established redirect *to google.nl* is realized using a so called "HTTP redirect". That is, if a browser first contacts the destination server and requests an electronic document, the destination server itself, having been configured to re-direct the request to another domain, replies to the browser that it should instead look at this domain.

The DNS message exchange, as discussed under Figs.1 and 2, illustrates the chain of interlinked actions through which a client request specifying a URL eventually leads to the accessing of a web document or service at a specific network address. Figs. 3-5 illustrate that HTTP-redirection is used to re-direct a request from a client, arriving at a destination IP address, to another destination IP address, based on the IP address of the server of the ISP requesting access to *www.goog*/*e.com.* Note that in the known protocol the network address of requesting client 102 itself is not propagated to the servers beyond server 108.

The inventors have realized that a network configuration can be implemented that is backwards compatible with the existing standardized DNS protocols and yet enables an individualized approach in providing DNS services.

Accordingly, the invention relates to a method of providing a service at a DNS server on a data network. A request is initiated by a client, and is received at the DN S server for access to a network site referred to in the request by a domain name. In the invention, the domain name is resolved under control of an attribute of the client For examples, the attribute comprises a network address of the client. On the Internet, the client's network address conveys information about the geographic region wherein the client is located. This information can then be used to map the domain name to that network address of the intended network service that provides a version configured for this particular geographic region, e.g., documents in the official language of the region of the client, news relevant to this region or a program guide of broadcasts scheduled for that region. As another example, the attribute comprises an aspect of a profile of the client as registered with a database, and the method comprises consulting the database upon receipt of the request so as to determine the network address under control of the profile. The profile is determined in advance, e.g., by the owner of the client, so as to guide access to services on the data network. The profile can be at least partly programmable by the user of the client. In an embodiment of the invention, the profile takes into consideration at least one of the following aspects: a geographic location of the client; a time of the day at the geographic location; a language; a demographic attribute associated with a user of the client; an identity of the user of the client; a history of requests from the client; a type of software used by the client (e.g., type of browser, type of firmware, version of software being used, etc.); and a type of hardware used by the client (e.g., PC, PDA [personal digital assistant], mobile phone, etc.), etc.

Accordingly, a method is proposed for providing a service at a DNS server on a data network. A request is initiated by a client, and is received at the DNS server for access to a network site referred to in the request by a domain name. The domain name is resolved under control of an attribute of the client. For example, the attribute comprises a network address of the client. As a result, the service enables to send different responses to different clients having submitted the same request.

In the invention, the domain name in the original request from the client is mapped to a network address under control of an attribute of the requesting client. This mapping occurs at a DNS server, preferably the first one in the DNS hierarchy so as to be compatible with the existing protocols.

The invention further relates to a DNS server for use on a data network. The server comprises receiving means for receiving a request, initiated by a client, for access to a network site referred to in the request by a domain name; and resolving means for resolving the domain name under control of an attribute of the client. In an embodiment, the attribute comprises a network address of the client. In a further embodiment, the DNS server comprises a database wherein the domain name is associated with multiple network addresses, and wherein the resolving means is operative to consult the database. In yet a further embodiment, the DNS server comprises a further database storing information about a profile of the client, wherein the attribute comprises an aspect of the profile, and wherein the resolving means is operative to consult the further databases.

The invention also relates to software for implementing a DNS server on a computer, e.g., a general purpose computer. The software comprises instructions for receiving, via a data network, a request initiated by a client. The request is intended for access to a network site referred to in the request by a domain name. The software also comprises instructions for resolving the domain name under control of an attribute of the client. For example, the attribute comprises a network address of the client.

### BRIEF DESCRIPTION OF THE DRAWING

The invention is explained in further detail, by way of example and with reference to the accompanying drawing, wherein:
Fig.1 is a block diagram of a system illustrating DNS related actions upon a request for downloading a web page;
Fig. 2 is a diagram illustrating a DNS message format;
Figs.3, 4 and 5 are examples of different responses to a DNS request for a single domain;

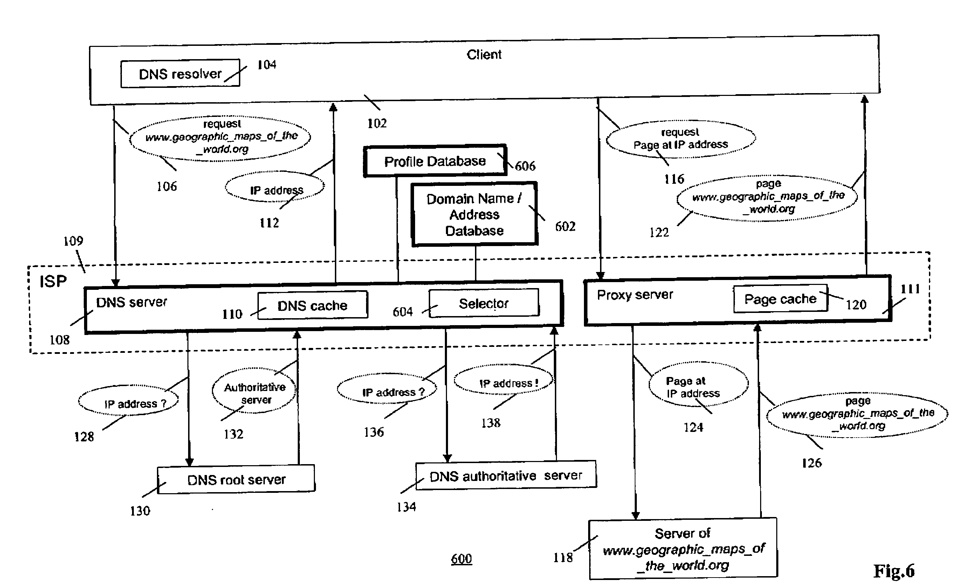

Figs.6, 7, and 8 are block diagrams of example, systems with a requester-aware DNS server.

Throughout the Figures, similar or corresponding features are indicated by same reference numerals.

### DETAILED EMBODIMENTS

As mentioned above, the invention relates, among other things, to a DNS server on a data network that maps a domain name, received in a request from a client for access to a network site, onto a network address under control of an attribute of the client. The attribute comprises, e.g., a network address of the client or another aspect of a profile of the client or of the user of the client.

Fig.6 is a block diagram of an embodiment 600 of a data processing system illustrating the DNS related actions in the invention. DNS server 108 has access to a database 602 with a register of domain names, each of which is associated with multiple network addresses. If the domain name in request 106: *www.geographic_maps_of_the_world.org,* does not occur in database 602, operations arc further as discussed with reference to Fig.1 above. If the domain name of request 106 does occur in database 602, server 108 uses a selection procedure 604 to select an appropriate one of the multiple network addresses registered for this domain name. In an embodiment of the invention, selection procedure 604 selects the network address based on the network address of client 102 that was received with request 106. In another embodiment, server 108 has access to a database 606 that stores a profile of client 102 and/or of its user. One or more aspects of this profile arc then used as criterions for determining which one of the network addresses is to be returned to client 102 in response to request 106. Thus, clients with different network addresses and/or with different profiles receive from server 108 different network addresses if they request the same domain name and if the domain name has been registered with multiple network addresses. Databases 602 and 606 are maintained by, e.g., ISP 109 or by another party providing a service to DNS server 108.

For example, a client with a network address signifying it is located in, e.g., the United Kingdom will get a network address for *www.geographic_maps_of_the_wor*/*d.org* that enables the user to download an electronic document or contact a service in the English language, whereas a client with a network address signifying that it is located in the Netherlands will get a network address for *www.geographic_maps_of_the_world.org* that supplies the user with an electronic document or service in the Dutch language. The result is comparable to that of HTTP re-directs. However, the approach taken by the invention is much more efficient. Furthermore, the approach of the invention is useable with any protocol including HTTP and, e.g., FTP, Telnet, VoIP (Voice-over IP), SMTP, etc. As another example, a service provider maintaining a destination server such as server 118 classifies its electronic documents or network services according to one or more criterions (e.g., language, geographic location or region, demographic aspects, etc.) and has respective classes assigned a respective network address, all these addresses being registered with the same domain name. A client requesting access to this domain will then have his/her access routed to a specific one of these network addresses whose class criterion matches this client's profile.

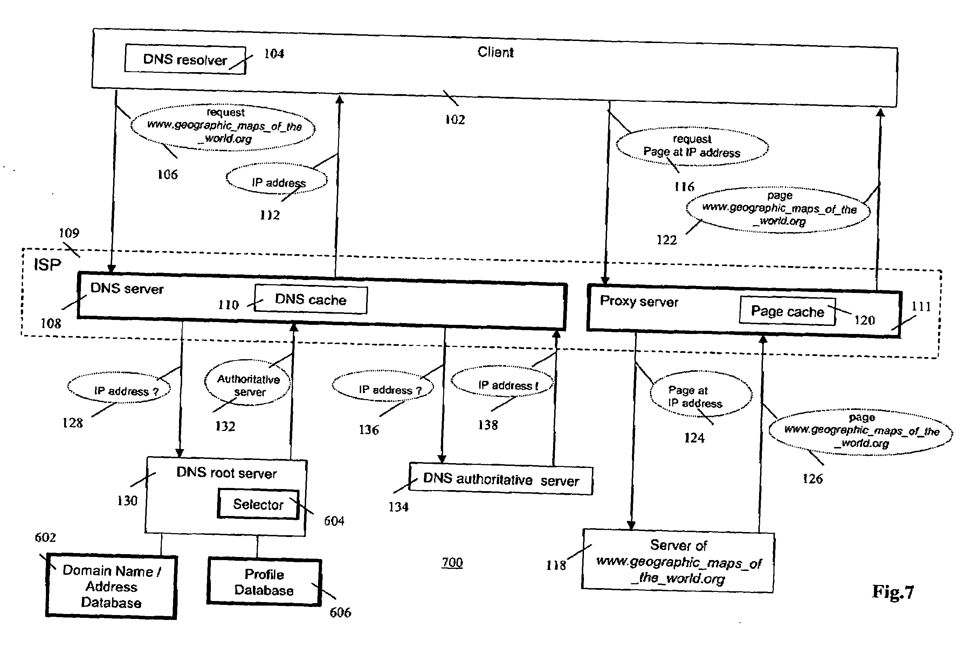

Fig.7 is a block diagram of another embodiment 700 of a data processing system according to the invention. Now, DNS root server 130 has access to database 602 containing a look-up table of domain names having multiple network addresses registered with them. Upon receipt of request 128 from server 108, DNS root server directs server 108 to a specific one of authoritative servers 134, based on the network address of server 108. In a further embodiment, root server 130 has access to profile database 606 that now stores profiles of contacting servers such as server 108. Server 108 is then directed to an authoritative server, here server 134, under control of its profile registered in database 606. This re-directing can be used for, e.g., load-balancing within the system as a whole.

In another embodiment (not shown) DNS server 134 has access to databases 602 and 606 so as to decide at its level in the hierarchy how to route the request, based on the network address and/or profile registered for root server 130. In yet another embodiment (not shown), destination server 118 (not itself a DNS server) has access to databases 602 and 606 to guide the access to an electronic document or a network service in accordance with the network address and/or profile of server 108 and/or of client 102.

In the invention, requester-awareness can be implemented at any server involved in DNS-related activities anywhere in the chain between client and destination server. The requester awareness in the examples discussed is implemented at ISP server 108, root server 130 or authoritative server 134. Different clients arc thus served with different responses to the same requests, either by the same destination server (server 118 8 in the examples discussed) or by different destination servers.

Accordingly a main advantage of above systems 600 and 700 resides in their ability to distinguish between different hosts and serve different hosts differently on their requests. Furthermore, it becomes possible to personalize replies to DNS queries, support load-balancing early in the chain, minimize delay, supporting any protocol that is dependent on DNS for resolving IP addresses. If there is only a single address available for a specific domain name, the conventional DNS procedure is followed. As a result, system 600 and 700 are backwards compatible with conventional DNS methods and do not require extra intelligence in, or changes to, client 102.

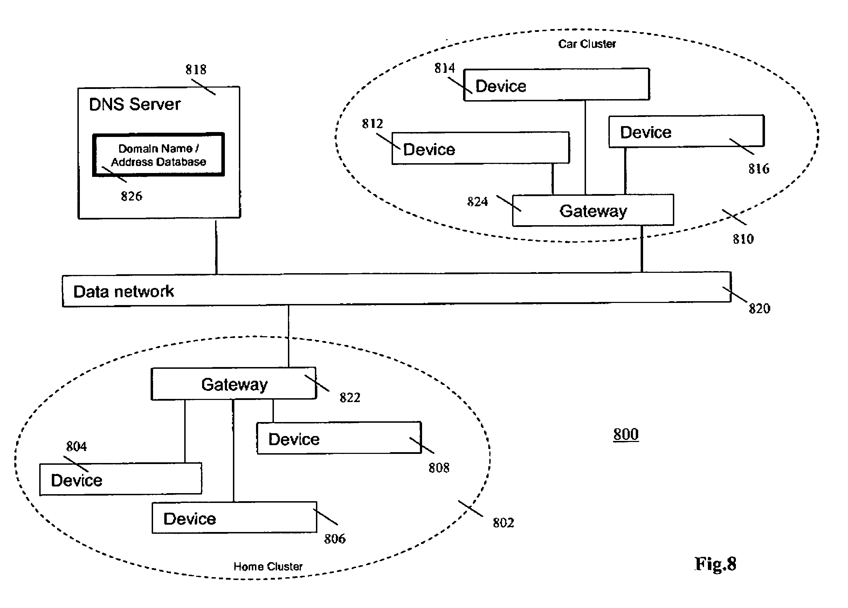

Fig.8 is a block diagram of yet another embodiment 800 of a data processing system in the invention. System 800 represents a so-called Personal Network (PN). A PN is a virtual network formed of the network-enabled devices that an individual uses for his/her personal purposes (e.g., for entertainment, for gathering information, for telecommunication, etc.). A PN is typically clustered in geographically distributed private networks or clusters (e.g., a home network cluster, a work-related cluster, a car-network cluster, personal area network (PAN) cluster. As an aside, a PAN is the network of devices in the personal area (i.c., operating space) of the user, and can be a part of the PN of this user. Typically, the clusters interconnect through an overlaying Virtual Private Network (VPN), e.g., via the Internet. This enables a user of a device in the PN to use the device from any place and at any time.

System 800 comprises a cluster 802 of network-enabled devices 804, 806,..., 808, and another cluster 810 of further network-enabled devices 812, 814,.., 816. Cluster 802 is, for example, the cluster of devices at the user's home, and cluster 810 is the cluster of devices forming (part of) an information/entertainment system onboard the user's car. Devices 804-808, 812-816 communicate with each other, within and outside their respective cluster, via a data network 820 and a gateway 822 of cluster 802 and a gateway 824 of cluster 810, consulting a DNS server 818 when necessary. Data network 820 is, e.g., the Internet. Gateways 822 and 824 set up a tunnel to a tunnel server, in Fig.8 also represented by server 818, so that devices 804-808, 812-816 can securely communicate with each other at the IP level. It is not required that the tunnel server and the DNS server run on the same physical hardware.

For facilitating user interaction with system 800, devices 804-808 and 812-816 are being represented to the user, at suitable user interfaces (not shown), with their domain name instead of with their network address.

An example scenario is the following. Device 804 serves as a client and provides a user interface to the user for control of system 800 from cluster 802. Similarly, device 812 serves as a client and provides a user interface to the user for control of system 800 from cluster 810. Device 806 in cluster 802 comprises an audio device and is addressed within cluster 802 with a domain name *"audio.local".* Similarly, device 816 in cluster 810 comprises an audio device and is addressed within cluster 810 with a domain name *"audio.local".* Now*,* if the user desires to interact with device 806 from within cluster 802, he/she uses client device 804 to send a request to server 818 for access to the service *"audio.local".* Server 818 has a database 826 that lists two network addresses associated with domain name *"audio.local",* namely one for device 806 and another for device 816. As the request is originating from client 804, and as the request includes the network address of client 806, server 818 resolves the domain name into the address for device 806 that is local to client 804. Similarly, if the user has client 812 request access to a service at *"audio.local",* server 818 resolves this domain name into the network address of audio device 816.

Another example scenario is the following. Device 804 serves as a client and provides a user interface to the user for control of system 800 from cluster 802. Similarly, device 812 serves as a client and provides a user interface to the user for control of system 800 from cluster 810. Device 806 in cluster 802 comprises an audio device and is addressed within cluster 802 with a domain name *"audio.domain.com".* Now, if the user desires to interact with device 806 from within cluster 802, he/she uses client device 804 to send a request to server 818 for access to the service *"audio.domain.com".* Server 818 has a database 826 that lists two network addresses associated with domain name *"audio.domain.com",* namely a private network address for devices in cluster 802 and a public network address for another device, e.g., in cluster 810. As the request originates from device 804 and include the network address of device 806, server 818 resolves the domain name into the network address for device 806 that is local to client 804. Similarly, if the user requests access to a service at *"audio.domain.com"* via client 812, server 818 resolves this domain name into the public network address of audio device 806, i.e., the public network address of cluster 802.

If clusters 802 and 810 in above example scenario arc connected via a specific router (not shown), referred to as an overlay network router (ONR), device 804 receives a different private network address from server 818 than does device 812 upon the same requests. Devices 804 and 812 receive the overlay network device address (ONDA) from server 818 after server has consulted the ONR for this. Both nodes 804 and 812 receive different ONDAs (.i.e., different private IP addresses). For more details, see non-pre-published European patent application 06 013 175.2, filed June 27, 2006 for Rachid Ait Yaiz, Mark Peeters and Frank Den Hartog for A PERSONAL NETWORK COMPRISING A PLURALITY OF CLUSTERS.

According to this non-pre-published patent application, a network is provided that comprises a plurality of clusters, generally private sub-networks, which can be coupled to each other by means of at least an external network, generally a public network. The clusters comprise a gateway to the external network and at least one node. The nodes in the network have local addresses, which arc used for transmitting a packet to other nodes in the same cluster. The local addresses are unique within the same cluster, but possibly overlapping with the local addresses of nodes outside the cluster. Furthermore, the nodes have at least one overlay address, which is used by the nodes of at least one cluster, for transmitting a packet to the nodes in the other clusters. The at least one overlay address of a node is different from the at least one overlay address of the other nodes in the network. The network comprises overlay network routing means, which store the local addresses and the overlay addresses of all the nodes in the network and a mapping between them. The gateway of the at least one cluster forwards a packet having an overlay address as destination address originating from a node in its cluster to the overlay network routing means. The overlay network routing means translate the overlay address in the packet to the local address of the destination node and forward the packet to the gateway of the cluster to which the destination node having the overlay address belongs. The gateway of the cluster of the destination node routes the packet to the destination node based on the local address thereof.

This overlay approach is based on the recognition that by using the overlay addresses for routing packets to nodes in other clusters, the local addresses of the nodes may have overlapping ranges. The overlay network routing means carry out the necessary address translation and packet routing. Hereby, the gateways and the nodes can be kept relatively simple. The nodes only need to know their own local address and the overlay addresses of devices that they want to communicate with.

The overlay network routing means translate the local address of the source node into the overlay address thereof and include said overlay address as source address into the packet that is forwarded to the gateway of the cluster of the destination node. In this way the source node will be addressable by the destination node, even if multiple devices with the same local address exist in different clusters of the network.

The nodes have additionally at least one further overlay address, which is used by the nodes of at least one further cluster, for transmitting a packet to the nodes in the other clusters. The at least one further overlay address of a node is different from the at least one further overlay address of the other nodes in the network. The overlay network routing means stores the local addresses and the further overlay addresses and a mapping between them. The gateway of the at least one further cluster forwards a packet having a further overlay address as destination address originating from a node in its cluster to the overlay network routing means. The overlay network routing means translate the further overlay address to the local address of the destination node and forwards the packet to the gateway of the cluster to which the destination node having the further overlay address belongs. The use of one or more further overlay addresses for the nodes is needed for example in the case that the local address range of a cluster overlaps with the overlay address range used in the network. In this case, the nodes of this cluster use one of the further overlay addresses for transmitting packets to nodes in other clusters. The different overlay addresses belong to different address ranges, whereas these address ranges for the ease of implementation are preferably disjunctive.

In case that the address ranges of the different overlay addresses are not disjunctive, it is ambiguous from which address range the address of a destination node in a packet is. In this case, the overlay network routing means should be further adapted for using either the mapping between the local addresses and the overlay addresses or the mapping between the local addresses and the further overlay addresses for the step of translating the overlay address or the further overlay address of the destination node into the local address thereof, depending on the source cluster that the packet is received from. If the nodes of the source cluster use overlay addresses for addressing other nodes in the network, the mapping between the local addresses and the overlay addresses is used. If the nodes of the source cluster use further overlay addresses for addressing other nodes in the network, the corresponding mapping between the local addresses and the further overlay addresses is used.

The overlay network routing means can be configured for translating the local address of the source node into either the overlay address thereof or into (one of) the further overlay address(es) thereof, depending on the destination cluster that the packet is to be routed to. The overlay address or further overlay address is included as source address into the packet to be forwarded to the gateway of the cluster of the destination node. The nodes of the destination cluster may know the nodes of the cluster of the source node either by the overlay address or by (one of) the further overlay address(es) thereof. By translating the source address into the fright" overlay address the source node will be addressable by the destination node.

The gateways and the overlay network routing means may encapsulate the packet in order to forward it to each other, for example by using a well-known tunneling protocol. Tunneling is generally done by encapsulating the private network data and protocol information within the public network transmission units so that the private network protocol information appears to the public network as data. As a result, tunneling allows the use of the public network to convey data on behalf of a private network.

Above overlay approach is particularly useful in networks, using Internet Protocol version 4 addresses. According to Internet Protocol version 4 three ranges of addresses, 30 10.0.0.0/8, 172.16.0.0/12 and 192.168.0.0/16 are reserved for use in private domains and are called "private IP addresses". The gateways of the clusters and the overlay network routing means all have globally unique addresses from the address range used for communication over public networks. The nodes of the clusters have local addresses and preferably also overlay addresses from one of the three ranges reserved for private addresses.

The overlay network routing means may have been embodied in a centralized overlay network router. A centralized architecture has several advantages over a distributed architecture. The functionality is concentrated in only one device instead of several devices spread over the network. Security issues are more easily handled and there are fewer tunnels needed. The overlay network router is preferably a stand-alone device located at the premises of a provider. Alternatively, the overlay network router is collocated with one of the gateways of the clusters in the network. In this case there is a single node comprising two logical entities: one with the gateway functionality and another with the overlay network router functionality. No encapsulating of packets is needed between the gateway entity and the overlay network router entity. The packets are internally forwarded from the gateway entity to the overlay network routing entity. The overlay network routing means may also be distributed over at least some of the gateways of the clusters in the network.

Alternatively, a part of the overlay network routing means is distributed over at least some of the gateways of the clusters in the network and another part is embodied in a centralized node. This "hybrid mode" may be particularly useful for route optimization, in case that some of the clusters are used far from the centralized node, for example in a foreign country.

## Claims

1. A method of providing a service at a DNS server (108; 818) on a data network (820), the method comprising:
receiving (106) a request, initiated by a client (102), for access to a network site referred to in the request by a domain name; and
resolving the domain name under control of an attribute of the client.

2. The method of claim 1, wherein the attribute comprises a network address of the client.

3. The method of claim 1 or 2, wherein:
the attribute comprises an aspect of a profile of the client;
the profile has been registered in a database (606); and
the resolving comprises consulting the database.

4. The method of claim 3, wherein the profile is at least partly programmable by a user of the client.

5. The method of claim 3 or 4, wherein the profile takes into consideration at least one of the following aspects:
a geographic location of the client;
a time of the day at the geographic location;
a language;
a demographic attribute associated with a user of the client;
an identity of the user of the client;
a history of requests from the client;
a type of software used by the client; and
a type of hardware used by the client.

6. The method of claims 1, 2, 3, 4 or 5, wherein the data network comprises a Personal Network.

7. A DNS server (108; 818) for use on a data network (820), the server comprising:
receiving means for receiving (106) a request, initiated by a client (102), for access to a network site referred to in the request by a domain name; and
resolving means (604) for resolving the domain name under control of an attribute of the client.

8. The DNS server of claim 7, wherein the attribute comprises a network address of the client.

9. The DNS Server of claim 7 or 8, comprising a database (602) wherein the domain name is associated with multiple network addresses, and wherein the resolving means is operative to consult the database.

10. The DNS server of claim 7, 8 or 9, comprising a further database (606) storing information about a profile of the client, wherein the attribute comprises an aspect of the profile, and wherein the resolving means is operative to consult the further database.

11. Software for implementing a DNS server (108; 818) on a computer, the software comprises instructions for:
via a data network (820) receiving (106) a request, initiated by a client (102), for access to a network site referred to in the request by a domain name; and
resolving the domain name under control of an attribute of the client.

12. The software of claim 11, wherein the attribute comprises a network address of the client.
